Europäisches Patentamt

(19) European Patent Office

Office européen des brevets

(11) Publication number: **0 133 593**
**B1**

(12) **EUROPEAN PATENT SPECIFICATION**

(45) Date of publication of patent specification: **01.04.87**

(21) Application number: **84201152.0**

(22) Date of filing: **09.08.84**

(51) Int. Cl.⁴: **A 23 N 7/02**

(54) Scraping/peeling device.

(30) Priority: **12.08.83 NL 8302838**

(43) Date of publication of application:
**27.02.85 Bulletin 85/09**

(45) Publication of the grant of the patent:
**01.04.87 Bulletin 87/14**

(84) Designated Contracting States:
**AT BE CH DE FR GB IT LI LU NL SE**

(56) References cited:
**WO-A-82/03314**
**US-A-3 001 561**
**US-A-3 123 114**

(73) Proprietor: **van Bolderen, Wilhelm Franciscus
Johannes
Horsterweg 412
NL-5928 NJ Venlo (NL)**

(72) Inventor: **van Bolderen, Wilhelm Franciscus
Johannes
Horsterweg 412
NL-5928 NJ Venlo (NL)**

(74) Representative: **de Boer, Hindrik Geert Jan et al
de Lairessestraat 131-135
NL-1075 HJ Amsterdam (NL)**

Courier Press, Leamington Spa, England.

## Description

The invention relates to a scraping/peeling device comprising a rotatable cylinder or drum, whose inner wall is provided with means for scraping and peeling, respectively.

Scraping/peeling devices of various kinds are known. There are two important types, namely one with a vertical and one with a horizontal drum shaft. The vertical drum as known in US—A—3001561 generally has at its underside a bottom plate rotating on a vertical shaft. This bottom plate may have a lining of carborundum, rubber·or a similar product. Peeling with small knives imparts a smoother appearance to the processed material. A scraping/peeling device may also be designed as a trough, in whose bottommost part parallel abrading/peeling rollers have been fitted lengthwise at a circumferential angle of approximately 120°, whilst the speed of the rollers can be varied. A conveyor screw may be employed for the displacement of the material processed.

The known scraping/peeling devices are subject to a number of drawbacks, such as the high proportion of wastage, which may be anything from 15% to 50%, and the relatively large power consumption of the drive gear.

It is an object of the present invention to provide an improved device of the type mentioned in the opening paragraph. To this end, the device has been designed in such a way, that the cylinder or drum is built up of a number of rings, which are coaxially aligned and which are rotatable with different circumferential speeds relative to one another.

The application of rings, which are rotatable with different circumferential speeds relative to one another, will result in a variable direction of travel being imparted to the material to be processed, which has a beneficial effect on the scraping/peeling process. It is not necessary to drive all the rings; they may be driven alternately. The capacity of the device can thereby be enhanced, whilst less energy is required for the drive gear. Moreover, by interlinking or not interlinking sets of rings a ready adaptation to different materials to be processed can be accomplished.

In order to elucidate the invention, several embodiments will now be described with reference to the accompanying drawings, in which

figure 1 shows a side view of the scraping/peeling device with rings bearing-mounted on one another;

figure 2 depicts the cross-section II of figure 1, the wall being provided with knives and apertures for the discharge of waste material;

figure 3 shows the section III of figure 2, representing the mounting of the rings with bearing elements;

figure 4 is a side view of another embodiment of the scraping/peeling device with the rings being disposed at some distance from one another so as to permit discharge of waste material;

figure 5 depicts the cross-section V of figure 4 with a driven ring provided with knives;

figure 6 represents the cross-section VI of figure 4 with a driven ring provided with a carborundum lining;

figure 7 depicts the cross-section VII of figure 4 with a rigidly mounted ring, either unlined or provided with a rubber lining;

figures 8 and 9 show a perspective and a lateral view, respectively, partially as a cross-sectional view, of a variant embodiment of a ring; and

figures 10 and 11 show corresponding views of yet another embodiment.

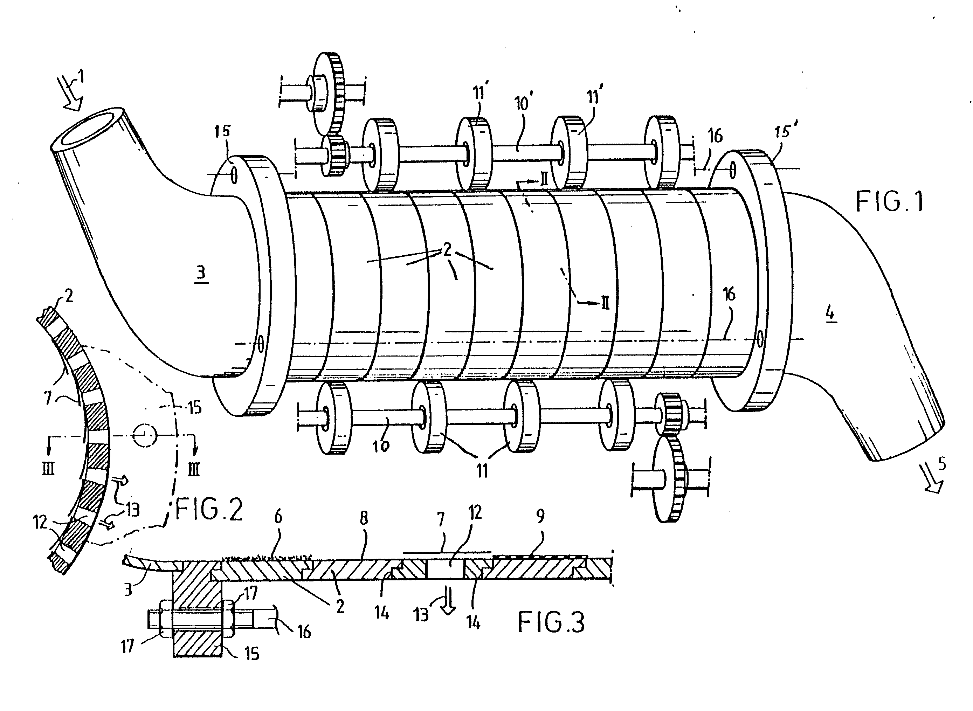

Figure 1 represents an embodiment of the device according to the invention, in which the product 1 to be peeled and/or scraped enters the device, which comprises rings 2 bearing-mounted on one another, through an inlet funnel 3 and is discharged through an outlet funnel 4 as processed product 5.

Depending on the material to be processed, the device may be composed of rings 2, which have been provided on the inside with various fittings, such as a carborundum lining 6, a lining consisting of small knives 7, which have been fixed so as to be substantially tangential with respect to the radial direction, a rubber lining 9 or other similar fittings. As shown in 8 one or more rings may be unlined. If designed wholly as a scraping device, the apparatus may be composed of rings 2 provided with a carborundum lining 6, if designed wholly as a peeling device, it may be composed of rings 2 provided with a lining consisting of knives 7. The rings 2 may be driven by friction gears 11, which are axially movable on a shaft 10. When a second driven shaft 10' with axially displaceable friction gears 11' is used, it is possible to give consecutive rings 2, which are bearing-mounted together, as indicated in figure 3, different or opposite peripheral speeds. This arrangement greatly promotes the tumbling of the materials to be scraped and/or peeled, whereby the process of taking the skins off is accelerated and facilitated.

Figure 2 represents a partial cross-section through a ring 2 with a lining of knives 7. Underneath the knives 7, funnel-shaped apertures 12 are provided for the discharge of the waste 13.

Figure 3 depicts how the rings 2 are mounted together with bearings 14. Depending on the nature of the material to be processed, the rings may be lined with carborundum 6, knives 7, unlined 8 or rubber 9. The terminal rings 15 and 15' can be spaced apart at the right distance by means of a bolt end 16 with bolts 17.

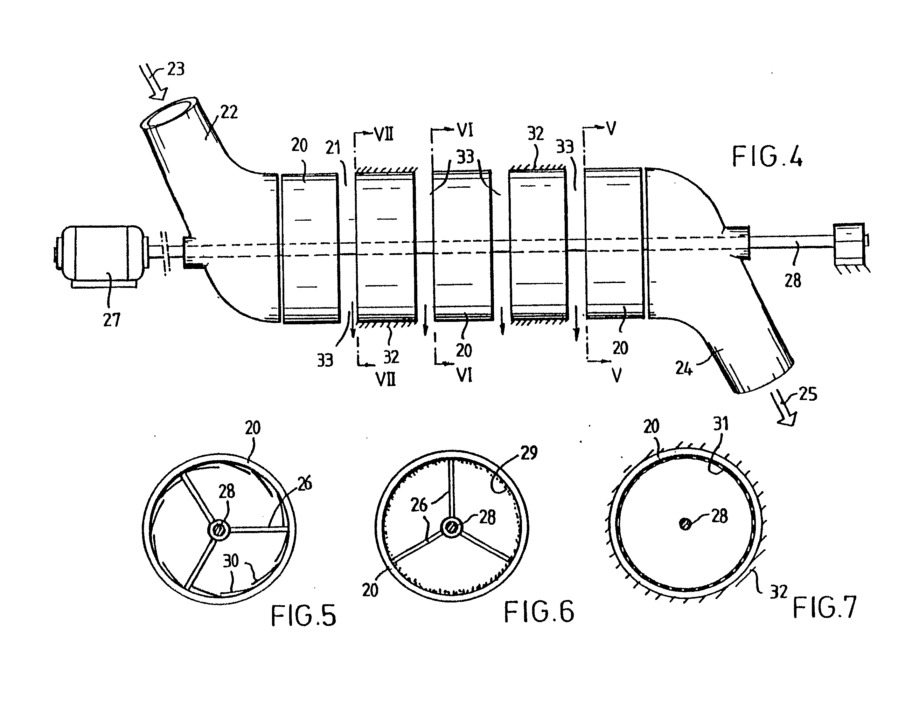

Figure 4 represents another embodiment of the scraping/peeling device according to the invention. The rings 20 have been mounted with suitable interstices 21 so as to form a drum between the inlet funnel 22 for the material 23 to be processed and the outlet funnel 24 for the processed material 25. A number of rings 32 may be rigidly fixed, whereas a number of rings 20 are attached with the aid of spokes 26 to a shaft 28 driven by a motor 27.

Figures 5, 6 and 7 depict cross-sections through various rings 20, which may be provided on the inside with different linings. Depending on the type of material to be scraped/peeled, the inner lining of the rings 20 may consist of carborundum 29, knives 30 or rubber 31. Some of the rings may have a smooth interior, that is without a lining. Waste material 33 may leave the device through the interstices 21, so that no clogging of the device takes place.

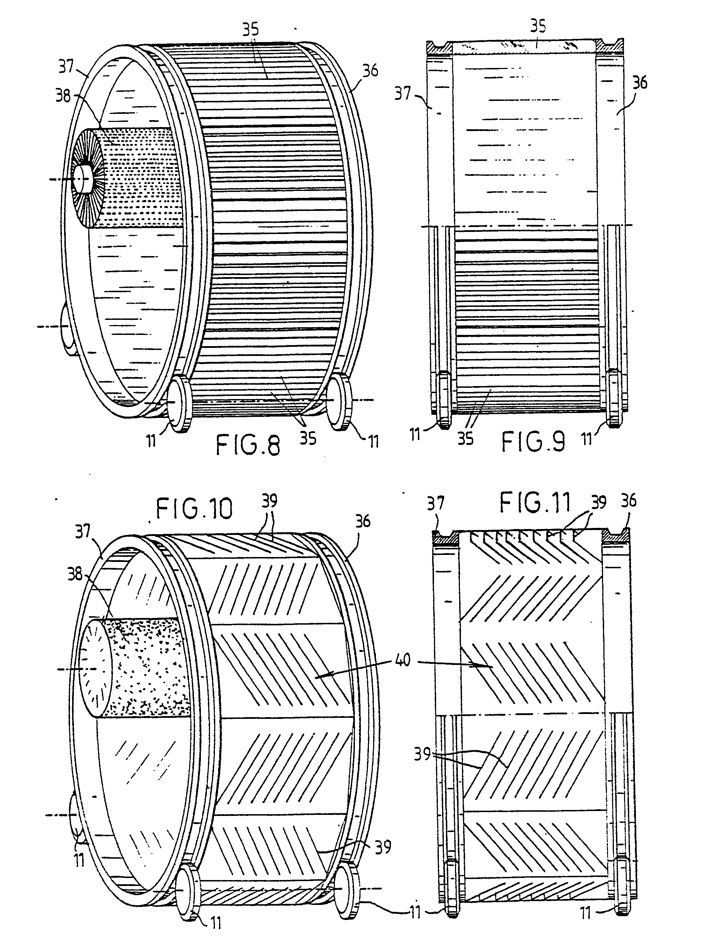

An efficacious device is also obtained by the use of a ring according to figures 8 and 9, with tangentially disposed knurled knives 35, which are accommodated either individually or groupwise in a sub-frame between two side-rings 36 and 37. Inside such a ring, a brush 38 may be mounted, whose direction of rotation is opposite to that of the said ring. This design results in an approximately triangular zone being formed between the ring with knives and the brush, allowing effective processing of the material to be peeled or scraped, for instance potatoes, without requiring water for flushing or cleaning.

A ring according to figures 8 and 9 can also be combined effectively with a ring according to figures 10 and 11. In that case the wall of the ring is formed by obliquely disposed knives 39, which are accommodated in series in twelve sub-frames 40 such that the knives of successive series are invariably oriented in opposite directions.

The drum rings according to figures 8—11 are entirely self-cleaning, even without the use of water.

The device is preferably designed so that the axis of the cylinder or drum has a substantially horizontal position.

The peripheral speed of the driven rings is usually between 50 and 100 metres per minute, and can go up to 200 metres per minute.

If desired, the device may be provided with at least one scrape-off trough mounted on the inner wall of one of the rings at the level of the cylinder axis so as to facilitate the discharge of waste material.

## Claims

1. A scraping/peeling device comprising a rotatable cylinder or drum, whose inner wall is provided with means for scraping and peeling, respectively, characterized in that the drum is built up of a number of rings (2, 20, 36, 37) coaxially aligned, which are rotatable with different circumferential speeds relative to one another.

2. A scraping/peeling device according to claim 1, characterized in that the rings (2, 20) can be driven so as to rotate independently from one another.

3. A scraping/peeling device according to claim 2, characterized in that some rings (2, 20) can be driven so as to rotate around a shaft, whilst other rings (32) are rigidly fixed so that rotatable and fixed rings alternate.

4. A scraping/peeling device according to claim 2, characterized in that consecutive rings have been mounted such that one ring can be driven in a sense opposite to the sense of rotation of the adjacent ring.

5. A scraping/peeling device according to claims 1—4, characterized in that the inside surface of at least one ring is provided with a carborundum lining (6, 29).

6. A scraping/peeling device according to claims 1—4, characterized in that the inside surface of at least one ring is provided with small knives (7, 30).

7. A scraping/peeling device according to claims 1—4, characterized in that the inside surface of at least one ring is provided with carborundum (6, 29) and the inside surface of at least one adjacent ring is provided with knives (7, 30).

8. A scraping/peeling device according to claims 1—7, characterized in that at least two adjacent rings can be linked together to form one ring.

9. A scraping/peeling device according to claims 1—8, characterized in that the axis of the cylinder or drum is approximately horizontal.

10. A scraping/peeling device according to claims 1—9, characterized in that the peripheral speed of the driven rings is between 50 and 200 metres per minute.

11. A scraping/peeling device according to claims 1—10, characterized in that at least one scrape-off trough has been mounted on the inner wall of one of the ring at the level of the cylinder axis.

12. A scraping/peeling device according to claims 1—10, characterized in that somewhat above the level of the cylinder axis a rotating brush (38) has been mounted, which lies against the normally rising section of the ring (36, 37) and which can be driven in a direction opposite to that of this ring.

13. A scraping/peeling device according to any one of the preceding claims, characterized in that two side-rings (36, 37) together constitute a ring with a large number of small knives (35, 39) mounted in between, which are at least partly parallel to one another.

14. A scraping/peeling device according to claim 13, characterized in that the knives (39) are disposed in series and parallel in such a fashion, that the knives (39) of successive series are oriented in opposite directions and obliquely relative to the tangential direction.

## Patentansprüche

1. Schab-/Schäleinrichtung mit einer um eine Achse drehenden Trommel oder zylindrischen Hülse, deren Innenwand mit Schab- bzw. Schälmitteln versehen ist, dadurch gekennzeichnet, dass die Trommel aus einer Anzahl koaxial angeordnete Ringe (2, 20, 26, 27), die mit untereinander verschiedenen Umfangsgeschwindigkeiten drehbar sind, aufgebaut ist.

2. Schab-/Schäleinrichtung nach Anspruch 1, dadurch gekennzeichnet, dass die Ringe (2, 20) unabhängig voneinander rotierbar angetrieben werden können.

3. Schab-/Schäleinrichtung nach Anspruch 2, dadurch gekennzeichnet, dass einige Ringe (2, 20) um eine Achse rotierbar angetrieben werden können, während andere Ringe (32) unbeweglich befestigt sind, so dass drehbare und feste Ringe sich abwechseln.

4. Schab-/Schäleinrichtung nach Anspruch 2, dadurch gekennzeichnet, das aufeinanderfolgende Ringe derart angeordnet sind, dass der eine Ring in entgegengesetzter Richtung zum nächsten Ring angetrieben werden kann.

5. Schab-/Schäleinrichtung nach den Ansprüchen 1 bis 4, dadurch gekennzeichnet, dass die Innenseite wenigstens eines Ringes mit einem Karborundumbelag (6, 29) versehen ist.

6. Schab-/Schäleinrichtung nach den Ansprüchen 1 bis 4, dadurch gekennzeichnet, dass die Innenseite wenigstens eines Ringes mit kleinen Messern (7, 30) versehen ist.

7. Schab-/Schäleinrichtung nach den Ansprüchen 1 bis 4, dadurch gekennzeichnet, dass die Innenseite wenigstens eines Ringes mit Karborundum (6, 29) und die Innenseite wenigstens eines benachbarten Ringes mit Messern (7, 30) versehen ist.

8. Schab-/Schäleinrichtung nach den Ansprüchen 1 bis 7, dadurch gekennzeichnet, dass wenigstens zwei benachbarte Ringe zusammengefügt werden können, um einen Ring zu bilden.

9. Schab-/Schäleinrichtung nach den Ansprüchen 1 bis 8, dadurch gekennzeichnet, dass die Achse der Trommel oder Hülse ungefähr waagerecht ist.

10. Schab-/Schäleinrichtung nach den Ansprüchen 1 bis 9, dadurch gekennzeichnet, dass die Umfangsgeschwindigkeit der angetriebenen Ringe zwischen 50 und 200 Meter pro Minut liegt.

11. Schab-/Schäleinrichtung nach den Ansprüchen 1 bis 10, dadurch gekennzeichnet, dass auf gleicher Höhe mit der Hülsenachse mindestens eine Abschabeschaufel an der Innenseite eines der Ringe angebracht ist.

12. Schab-/Schäleinrichtung nach den Ansprüchen 1 bis 10, dadurch gekennzeichnet, dass etwas oberhalb der Höhe der Hülsenachse eine rotierende Bürste (38) angebracht ist, die sich am senkrechten Abschnitt des Ringes (36, 37) anlehnt und in entgegengesetzter Richtung zu diesem Ring angetrieben werden kann.

13. Schab-/Schjäleinrichtung nach den vorhergehenden Ansprüchen, dadurch gekennzeichnet, dass zwei Endringe (36, 37) zusammen einen Ring bilden mit einer grossen Anzahl von dazwischen angebrachten kleinen Messern (35, 39) die zumindest teilweise parallel zueinander angeordnet sind.

14. Schab-/Schäleinrichtung Anspruch 13, dadurch gekennzeichnet, dass die Messer (39) derart in Reihen und parallel angeordnet sind, dass die Messer (39) aufeinanderfolgender Reihen in entgegengesetzten Richtungen und schräg bezüglich der Tangentialrichtung orientiert sind.

## Revendications

1. Dispositif pour racler/peler, comprenant un cylindre ou tambour rotatif dont la paroi intérieure est pourvue de dispositifs pour racler et peler respectivement, caractérisé en ce que le tambour est constitué d'un certain nombre de bagues (2, 20, 26, 27) alignées coaxialement et pouvant tourner avec des vitesses périphériques différentes l'une par rapport à l'autre.

2. Dispositif pour racler/peler selon la revendication 1, caractérisé en ce que les bagues (2, 20) peuvent être entraînées de façon à tourner indépendamment l'une de l'autre.

3. Dispositif pour racler/peler selon la revendication 2, caractérisé en ce que certaines bagues (2, 20) peuvent être entraînées de façon à tourner autour d'un arbre, tandis que d'autres bagues (32) sont fixées rigidement, si bien que les bagues fixes et les bagues rotatives se succèdent alternativement.

4. Dispositif pour racler/peler selon la revendication 2, caractérisé en ce que les bagues successives sont montées de façon à ce qu'une bague puisse être entraînée dans le sens opposé au sens de rotation de la bague voisine.

5. Dispositif pour racler/peler selon les revendications 1—4, caractérisé en ce que la surface intérieure d'au moins une bague est pourvue d'un revêtement de carborundum (6, 29).

6. Dispositif pour racler/peler selon les revendications 1—4, caractérisé en ce que la surface intérieure d'au moins un bague est pourvue de petits couteaux (7, 30).

7. Dispositif pour racler/peler, selon les revendications 1—4, caractérisé en ce que la surface intérieure d'au moins une bague est pourvue de carborundum (6, 29) et que la surface intérieure d'au moins une bague voisine est pourvue de couteaux (7, 30).

8. Dispositif pour racler/peler selon les revendications 1—7, caractérisé en ce qu'au moins deux bagues voisines peuvent être assemblées pour former une seule bague.

9. Dispositif pour racler/peler selon les revendications 1 à 8, caractérisé en ce que l'axe du cylindre ou tambour est approximativement horizontal.

10. Dispositif pour racler/peler selon les revendications 1 à 9, caractérisé en ce que la vitesse périphérique des bagues entraînées est comprise entre 50 et 200 mètres par minutes.

11. Dispositif pour racler/peler selon les revendications 1 à 10, caractérisé en ce qu'au moins une auge de raclage est montée sur la paroi intérieure de l'une des bagues au niveau de l'axe du cylindre.

12. Dispositif pour racler/peler selon les revendications 1—10, caractérisé en ce qu'une brosse rotative (38) est montée un peu au-dessus du niveau de l'axe du cylindre et appuie sur la section de bague (36, 37) qui est normalement montante, cette brosse pouvant être entraînée dans une direction opposée à celle de cette bague.

13. Dispositif pour racler/peler selon l'une des revendications précédentes, caractérisé en ce que deux bagues latérales (36, 37) constituent ensemble une bague avec un grand nombre de petits couteaux (35, 39) montés entre elles et qui sont au moins partiellement parallèles les uns aux autres.

14. Dispositif pour racler/peler selon la revendication 13, caractérisé en ce que les couteaux (39) sont disposés en série et parallèlement, de façon à ce que les couteaux (39) des séries successives soient orientés dans des directions opposées et obliquement par rapport à la direction tangentielle.

FIG.1

FIG.2

FIG.3

0 133 593

FIG.4

FIG.5

FIG.6

FIG.7

FIG.8

FIG.9

FIG.10

FIG.11

3